# EUROPEAN PATENT SPECIFICATION

(11) **EP 2 510 731 B1**
(45) Date of publication and mention of the grant of the patent: **21.02.2018**
(21) Application number: 10795120.4
(22) Date of filing: 02.12.2010
(51) Int. Cl.: H04W 68/02

(54) **SYSTEM AND METHOD FOR SIGNAL DETECTION USING A DYNAMIC THRESHOLD**
SYSTEM UND VERFAHREN ZUR SIGNALERFASSUNG MIT EINEM DYNAMISCHEN SCHWELLENWERT
SYSTÈME ET PROCÉDÉ DE DÉTECTION DE SIGNAL EN UTILISANT UN SEUIL DYNAMIQUE

(30) Priority: 07.12.2009 US 632729
(43) Date of publication of application: 17.10.2012
(73) Proprietor: Qualcomm Incorporated, San Diego, CA 92121 (US)
(72) Inventor: DESHPANDE, Yogen N., San Diego California 92121 (US)
(74) Representative: Wegner, Hans
(86) International application number: PCT/US2010/058772
(87) International publication number: WO 2011/071752

(56) References cited:
- WO-A1-03/024146
- GB-A- 2 328 588
- US-A1- 2003 104 849
- US-A1- 2005 181 731
- US-A1- 2006 135 073
- US-A1- 2007 076 643
- ASGHAR Z ET AL: "Automatic threshold control for improved paging detection performance in wireless systems", GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, PISCATAWAY, NJ, USA, vol. 5, 29 November 2004 (2004-11-29), pages 3310-3315, XP010758332, DOI: 10.1109/GLOCOM.2004.1378962 ISBN: 978-0-7803-8794-2

## Description

### BACKGROUND

### Field

This disclosure relates to signal detection, and in particular, relates to signal detection using a dynamic threshold.

### Description of the Related Technology

When attempting to detect a transmitted signal, there are two kinds of errors one can make: (1) a false positive, in which it is determined that a signal is detected when no signal has been transmitted, and (2) a false negative, in which it is determined that no signal is detected when a signal has been transmitted. The relative cost of each of these errors is dependent on the particular application.

A WCDMA system pages a user equipment (UE), such as a mobile phone, in two steps, using two different code channels: (1) the Paging Indicator Channel (PICH) and (2) the Paging Channel (PCH). When a paging message is sent on the PCH, the network also transmits a paging indicator on the PICH, which is monitored by the UE. Upon detecting a paging indicator on the PICH, the UE reads the PCH to receive the paging message. A false positive in detecting the paging indicator results in a wasted power, as reading the PCH consumes more power compared to reading the PICH alone. However, a false negative in detecting the paging indicator results in a missed paging message. Typically, the network retransmits the paging indicator and the paging message between two and four times in order to avoid missed paging messages.

Document US 2005/181731 A1 discloses a system and method for improving the detection performance of a wirelessly transmitted signal. A preferred embodiment comprises specifying a desired response for missed channel detection and false alarm probabilities for a plurality of signal qualities and determining if a channel detection threshold is based on missed channel detection or false alarm probabilities for the plurality of signal qualities. A signal quality estimate of a channel can be inferred from a signal quality measurement of a second channel, wherein the channel and the second channel are sourced by a single transmitter. The channel detection threshold can be adjusted based upon the previously determined required response and the signal quality estimate of the channel.

Document Asghar et al., "Automatic threshold control for improved paging detection performance in wireless systems", 29 November 2004, ISBN 978-0-7803-8794-2, discloses that wireless systems such as UMTS use a Paging Indicator Channel (PICH) to signal whether a mobile is being paged and that the threshold for PICH detection must be set to balance the tradeoff between missed calls (due to missed page) and lowered battery life (due to false alarms) where changing the threshold to decrease one comes at the expense of increasing the other.

Document US 2003/104849 A1 discloses that in a CDMA mobile terminal, the power supply voltage of the mobile terminal is compared with a first threshold voltage, and frequency monitor is performed at a normal rate if the power supply voltage is higher than the first threshold voltage, and frequency monitor is performed at 1/N of the normal rate if the power supply voltage is lower than the first threshold voltage, where N is equal to or greater than 2. Additionally, the power level of an RF signal received by the mobile terminal is compared with a first reference level, and frequency monitor is performed at the normal rate if the power level of the RF signal is lower than the first reference level, and frequency monitor is performed at 1/N of the normal rate if the power level of the RF signal is higher than the first reference level.

Document GB 2 328 588 A discloses that the battery life of a mobile communication terminal which performs activities at particular time intervals, or slots, is extended by controlling a slot cycle according to a remaining capacity of the battery. The terminal has a slot cycle index table for storing a plurality of reference levels and their corresponding slot cycle indexes. As a slot cycle change mode is set, the terminal detects the battery level in a prescribed level check cycle and compares the detected battery level with the reference levels in sequence. If the detected battery level is higher than a selected one of the reference levels, the terminal sets the slot index to a value corresponding to the selected reference level. Further, the terminal sets the slot cycle index corresponding to a longest slot cycle, when the detected battery level falls outside of a reference level range.

### SUMMARY

The invention is defined in the independent claims, with further embodiments being described in the dependent claims.

The features of this invention provide a dynamic threshold for signal detection.

### BRIEF DESCRIPTION OF THE DRAWINGS

Figure 1 is a functional block diagram of a wireless communication device.
Figure 2 is an exemplary chart of the PICH signal level and detection threshold versus cycle number.
Figure 3 is another exemplary chart of the PICH signal level and detection threshold versus cycle number.
Figure 4 is a flowchart illustrating a method of detecting a signal.
Figure 5 is a flowchart illustrating a method of detecting a signal based at least in part on a charging condition of an electronic device, according to an embodiment of the present invention.

### DETAILED DESCRIPTION

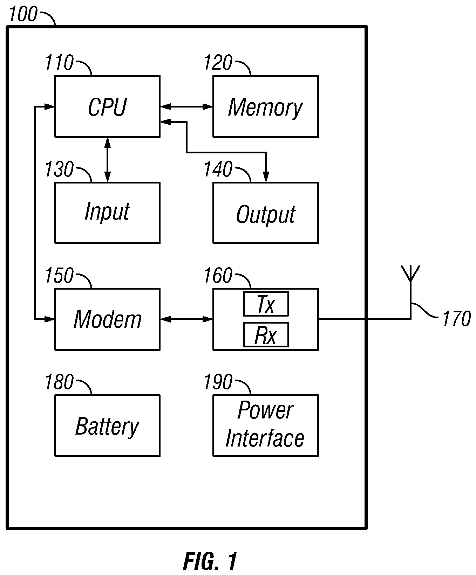

Figure 1 is a functional block diagram of a wireless communication device. The wireless communication device 100 includes a processor 110 in data communication with a memory 120, an input device 130, and an output device 140. The processor is further in data communication with a modem 150 and a transceiver 160. The transceiver 160 is also in data communication with the modem 150 and an antenna 170. The wireless communication device 100 and components thereof are powered by a battery 180 and/or an external power source. In some embodiments, the battery 180, or a portion thereof, is rechargeable by an external power source via a power interface 190. Although described separately, it is to be appreciated that functional blocks described with respect to the wireless communication device 100 need not be separate structural elements. For example, the processor 110 and memory 120 may be embodied in a single chip. Similarly, two or more of the processor 110, modem 150, and transceiver 160 may be embodied in a single chip.

The processor 110 can be a general purpose processor, a digital signal processor (DSP), an application specific integrated circuit (ASIC), a field programmable gate array (FPGA) or other programmable logic device, discrete gate or transistor logic, discrete hardware components, or any suitable combination thereof designed to perform the functions described herein. A processor may also be implemented as a combination of computing devices, e.g., a combination of a DSP and a microprocessor, a plurality of microprocessors, one or more microprocessors in conjunction with a DSP core, or any other such configuration.

The processor 110 can be coupled, via one or more buses, to read information from or write information to memory 120. The processor may additionally, or in the alternative, contain memory, such as processor registers. The memory 120 can include processor cache, including a multi-level hierarchical cache in which different levels have different capacities and access speeds. The memory 120 can also include random access memory (RAM), other volatile storage devices, or non-volatile storage devices. The storage can include hard drives, optical discs, such as compact discs (CDs) or digital video discs (DVDs), flash memory, floppy discs, magnetic tape, and Zip drives.

The processor 110 is also coupled to an input device 130 and an output device 140 for, respectively, receiving input from and providing output to, a user of the wireless communication device 100. Suitable input devices include, but are not limited to, a keyboard, buttons, keys, switches, a pointing device, a mouse, a joystick, a remote control, an infrared detector, a video camera (possibly coupled with video processing software to, e.g., detect hand gestures or facial gestures), a motion detector, or a microphone (possibly coupled to audio processing software to, e.g., detect voice commands). Suitable output devices include, but are not limited to, visual output devices, including displays and printers, audio output devices, including speakers, headphones, earphones, and alarms, and haptic output devices, including force-feedback game controllers and vibrating devices.

The processor 110 is further coupled to a modem 150 and a transceiver 160. The modem 150 and transceiver 160 prepare data generated by the processor 110 for wireless transmission via the antenna 170 according to one or more air interface standards. The modem 150 and transceiver 160 also demodulate data received via the antenna 170 according to one or more air interface standards. The transceiver can include a transmitter 162, a receiver 164, or both. In other embodiments, the transmitter and receiver are two separate components. The modem 150 and transceiver 160, can be embodied as a general purpose processor, a digital signal processor (DSP), an application specific integrated circuit (ASIC), a field programmable gate array (FPGA) or other programmable logic device, discrete gate or transistor logic, discrete hardware components, or any suitable combination thereof designed to perform the functions described herein.

The wireless communication device 100 and components thereof are powered by a battery 180 and/or an external power source. The battery 180 can be any device which stores energy, and particularly any device which stores chemical energy and provides it as electrical energy. The battery 180 can include one or more secondary cells including a lithium polymer battery, a lithium ion battery, a nickel-metal hydride battery, or a nickel cadmium battery, or one or more primary cells including an alkaline battery, a lithium battery, a silver oxide battery, or a zinc carbon battery. The external power source can include a wall socket, a vehicular cigar lighter receptacle, a wireless energy transfer platform, or the sun.

In some embodiments, the battery 180, or a portion thereof, is rechargeable by an external power source via a power interface 190. The power interface 190 can include a jack for connecting a battery charger, an inductor for near field wireless energy transfer, or a photovoltaic panel for converting solar energy into electrical energy.

In some embodiments, the wireless communication device 100 is a mobile telephone, a personal data assistant (PDAs), a hand-held computer, a laptop computers, a wireless data access card, a GPS receiver/navigator, a camera, an MP3 player, a camcorder, a game console, a wrist watch, a clock, or a television.

In one embodiment, when a wireless communication device, such as that illustrated in Figure 1, is in an idle mode, the device periodically monitors certain frames of a paging indicator channel (PICH). Each period is designated a discontinuous reception (DRX) cycle. The device is configured to detect a paging indicator by integrating the digital signal received during paging indicator bits. A base station sends positive paging indicator bits on the PICH if there is no paging message on a paging channel (PCH) and negative paging indicator bits if there is a paging message on the PCH for the device.

In one embodiment, the threshold for paging indicator detection is zero. Therefore, if the integration sum is positive, the device determines that there is no paging message, whereas if the integration sum is negative, the device determines that there is a paging message and reads the paging channel (PCH) to receive the paging message. Due to channel impairments, such as noise, the incoming signal may be corrupted and a strongly negative integration sum may be received as a weakly positive value. In that case, if the device is using the default threshold, the device will determine that there is no paging message. If there is a paging message, the base station typically repeats transmission of negative paging indicator bits over a number of DRX cycles, e.g. two to four cycles. If the signal is again corrupted, the device will not receive the paging message. However, if the device falsely detects a paging indicator on the PICH and monitors the PCH when there is no incoming call, power is wasted.

In another embodiment, the threshold for paging indicator detection is dynamic. If the integration sum is above the threshold, the device determines that there is no paging message, whereas if the integration sum is below the threshold, the device determines that there is a paging message and reads the paging channel (PCH) to receive the paging message. If, during a particular cycle, the integration sum is above the threshold, but close to the threshold, the device determines that there is no paging message because the sum is above the threshold, but changes the threshold for a number of subsequent cycles. If there is a paging message, the base station repeats transmission of negative paging indicator bits over a number of subsequent cycles. If the signal is again corrupted, such that the integration sum is above the previously threshold, but close enough to the previous threshold such that it is below the adjusted threshold, the device will determine that there is a paging message and read the PCH to receive the message.

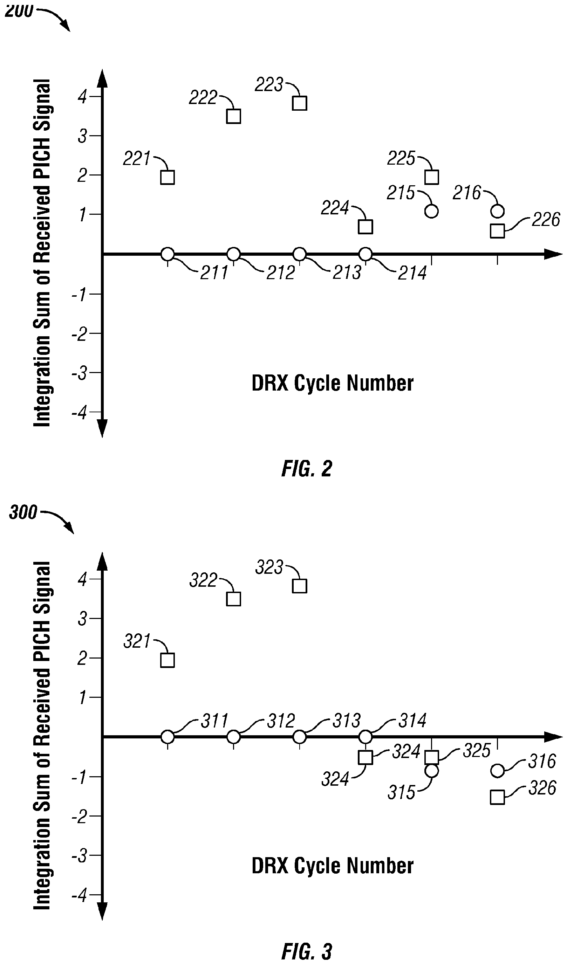

Figure 2 is an exemplary chart 200 of the PICH signal level and detection threshold versus cycle number. Figure 2 illustrates an embodiment having a dynamic threshold. In Figure 2, the threshold begins at zero. When the first signal is received on the PICH during the first DRX cycle, the device determines the integration sum for the first signal 221. In Figure 2, this first integration sum 221 is not below the threshold 211, therefore no detection occurs. Further, the first integration sum 221 is not close to the first threshold 211, so the threshold is not changed for subsequent cycles. To determine if the integration sum is "close" to the threshold, the wireless communication device may determine if the integration sum is within a predetermined distance of the threshold.

When a second signal is received during the second DRX cycle, the device determines the integration sum for the second signal 222. Again, the second integration sum 222 is not below the threshold 212 and no detection occurs. As the second integration sum 222 is not close to the threshold 212, the threshold is not changed for subsequent cycles. The third integration sum 223 is similarly neither below the threshold 213 nor close to it.

When a fourth signal is received during the fourth DRX cycle, the device determines the integration sum for the fourth signal 224. Because the fourth integration sum 224 is not below the threshold 214, no detection occurs. However, the fourth integration sum 224 is close to the threshold 214. In particular, the fourth integration sum 224 is within one unit of the detection threshold 214. Thus, an adjusted threshold is selected for us in number of succeeding cycles. In Figure 2, the threshold is adjusted up by one for at least two cycles.

When a fifth signal is received during the fifth DRX cycle, the device determines the integration sum for the fifth signal 225. Because the fifth integration sum 225 is not below the selected threshold 215 (in this case, the adjusted threshold of one), no detection occurs. The sixth integration sum 226 for the sixth signal received during the sixth DRX cycle is not below the original threshold of zero, but is below the selected threshold 216 of one. Therefore, detection occurs and the wireless communication device reads the PCH to receive a paging message.

As discussed above, when a base station sends a paging indication, it retransmits the indication in a number of DRX cycles. Thus, the integration sum is expected to be negative or, if corrupted, slightly positive for a number of cycles. If the threshold was not dynamic, but simply adjusted to a higher value, this would result in more false positives and wasted power. However, if the threshold is not adjusted, this will result in more false negatives and missed paging messages. Dynamically adjusting the threshold allows for a balance to be achieved between these two costly events.

The detection scheme discussed above with respect to Figure 2 takes advantage of the repetition of the paging indicator by dynamically adjusting the threshold so as avoid false negatives. The detection scheme discussed below with respect to Figure 3 takes advantage of the repetition of the paging indicator by dynamically adjusting the threshold so as to avoid false positives.

Figure 3 is another exemplary chart 300 of the PICH signal level and detection threshold versus cycle number. Figure 3 also illustrates an embodiment having a dynamic threshold. In Figure 3, the threshold again begins at zero. When the first signal is received on the PICH during the first DRX cycle, the device determines the integration sum for the first signal 321. In Figure 3, this first integration sum 321 is not below the threshold 311, therefore no detection occurs. Further, the first integration sum 321 is not close to the first threshold 311, so the threshold is not changed for subsequent cycles.

When a second signal is received during the second DRX cycle, the device determines the integration sum for the second signal 322. Again, the second integration sum 322 is not below the default threshold 312 and no detection occurs. As the second integration sum 322 is not close to the threshold 312, the threshold is not changed for subsequent cycles. The third integration sum 323 is similarly neither below the threshold 313 nor close to it.

When a fourth signal is received during the fourth DRX cycle, the device determines the integration sum for the fourth signal 324. Because the fourth integration sum 324 is below the threshold 314, detection occurs and the device reads the PCH to receive a paging message. Further, the fourth integration sum 324 is close to the threshold 314. In particular, the fourth integration sum 324 is within one unit of the detection threshold 314. Thus, an adjusted threshold is selected for us in number of succeeding cycles. In Figure 3, the threshold is adjusted down by one for at least two cycles. In one embodiment, the threshold is only adjusted downward if there is no paging message on the PCH corresponding to the integration sum of 324 and therefore the detection was a false positive.

When a fifth signal is received during the fifth DRX cycle, the device determines the integration sum for the fifth signal 325. Although the fifth integration sum 325 is below the previous threshold 314 (zero), it is not below the adjusted threshold 315 (one), so no detection occurs. The sixth integration sum 326 for the sixth signal received during the sixth DRX cycle is below the original threshold of zero and the adjusted threshold 316 of one. Therefore, detection occurs and the wireless communication device reads the PCH to receive a paging message.

Whereas the discussion regarding Figure 2 illustrates, in one embodiment, a method in which the threshold is increased when a determined value is close to the threshold and the discussion regarding Figure 3 illustrates, in one embodiment, a method in which the threshold is decreased when a determined value is close to the threshold and/or a false positive is detected, both of these embodiments may be combined such that the threshold is increased when the determined value is close to the threshold and the detection is not a false positive, but decreased when the determined value is close to the threshold and the detection is a false positive.

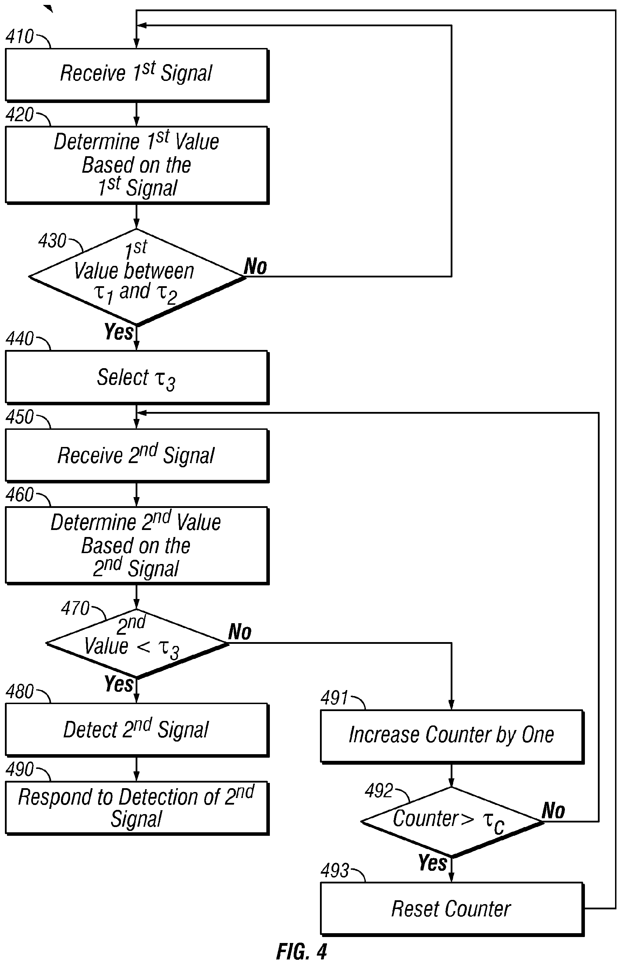

The detection schemes discussed above with respect to Figures 2 and 3 fall under a more general method of detection. Figure 4 is a flowchart illustrating a method 400 of detecting a signal. The method 400 begins, in block 410, with the reception of a first wireless communication signal. The signal may be received, for example, by the wireless communication device 100 of Figure 1, particularly the processor 110 via one or more of the antenna 170, transceiver 160, and modem 150. The wireless communication signal may be simply noise or a transmitted signal embedded in noise, making it difficult to determine if a wireless signal was actually transmitted or whether only noise was received.

Next, in block 420, a first value based on the first signal is determined. One or more of the transceiver 160, modem 150, and processor 110 can determine the value. In one embodiment, the value is an integration sum of the voltage induced on the antenna 170 by the wireless communication signal over a predetermined period of time. In another embodiment, the value is a maximum voltage induced on the antenna 170 by the signal. In yet another embodiment, the value is a received signal power of the first signal or a phase of the signal.

Continuing, in decision block 430, it is determined whether the first value is between a predetermined first threshold and a predetermined second threshold. The determination can be performed by, for example, the processor 110. It if is determined that the first value is not between the first and second threshold, the method 400 returns to block 410. If it is determined that the first value is between the first and second threshold, the method 400 continues to block 440, where a third threshold is selected.

In one embodiment, if it is determined that the first value is below the lesser of the first and second thresholds, the first signal is detected and the method 400 ends. Figures 2 and 3 illustrate examples of such embodiments. In another embodiment, if it is determined that the first value is above the greater of the first and second thresholds the first signal is detected and the method 400 ends. Examples of such embodiments could be envisioned by rotating Figures 2 and 3 by 180 degrees.

In block 440, the third threshold is selected based at least in part on the determination that the first value is between the first and second thresholds. In one embodiment, the processor 110 selects the threshold. The threshold may be selected by the processor 110 using a look-up table stored in the memory 120, wherein a predetermined third threshold is selected based on the positive determination. Although the term "third threshold" is used, it is to be understood that the selected threshold could be the same as the first threshold or the second threshold, or different from first threshold and the second threshold. In one particular embodiment, the third threshold has a magnitude less than the greater of the magnitude of the first threshold and the magnitude of the second threshold.

From block 440, the process 400 continues to blocks 450 and 460 where a second signal is received and a second value is determined. The steps associated with these blocks can be performed as described above with respect to blocks 410 and 420, respectively.

Next, in decision block 470, the second value is compared to the selected threshold. The comparison can be performed by, for example, the processor 110. If the second value is less than the threshold, the method 400 continues to block 480 where the second signal is detected. In one embodiment, the presence (or absence) of the second signal is stored as a one-bit flag in the memory 120. If the second value is greater than the threshold, the signal is not detected and the method 400 continues to block 491 where a counter, which starts at and resets to zero, is incremented by one. From block 491, the method 400 continues to decision block 492, where it is determined if the counter is greater than a counter threshold. If the counter is greater than the counter threshold, the method 400 moves to block 493 where the counter is reset before returning to block 410, whereas if the counter is less than or equal to the counter threshold, the method 400 returns to block 450. In another embodiment, not illustrated in Figure 4, if the second value is between the first and second threshold, the counter is not incremented in block 491, but is reset.

In another embodiment, the outputs of decision block 470 are switched such that if the second value is greater than the magnitude of the threshold, the method continues to block 480, whereas if the second value is less than or equal to the magnitude of the threshold, the method continues to block 491.

Once the signal has been detected, in block 480, the process continues to block 490 in which various actions may be performed in response to the detection. In one embodiment, the detection is indicated to the user via the output device 140. In another embodiment, the wireless communication signal is received on a first wireless channel and the detection prompts the wireless communication device 100 to read a second wireless channel. For example, in one embodiment the wireless communication signal is a paging indicator received on a paging indicator channel (PICH), and in response the wireless communication device 100 reads a paging channel (PCH) to receive a paging message.

As discussed above, in different applications, there are different costs associated with false positives and false negatives. For example, in WCMDA, the cost associated with a false positive in detecting a paging indication on the PICH is wasted power in reading the PCH, whereas the cost associated with a false negative in detecting a paging indication on the PICH is a missed paging message. Although it seems as though the cost associated with a false negative (missed paging message) far outweighs the cost of a false positive (wasted power), this is not necessarily true, as the user equipment must perform signal detection on the PICH thousands of times a day. The wasted power from false positives can quickly add up if they occur frequently. However, if the device has a full battery charge or is being charged by an external power source, there is less cost associated with the wasted power associated with a false positive. In one embodiment, the wireless communication device selects a detection threshold based on a charging condition device.

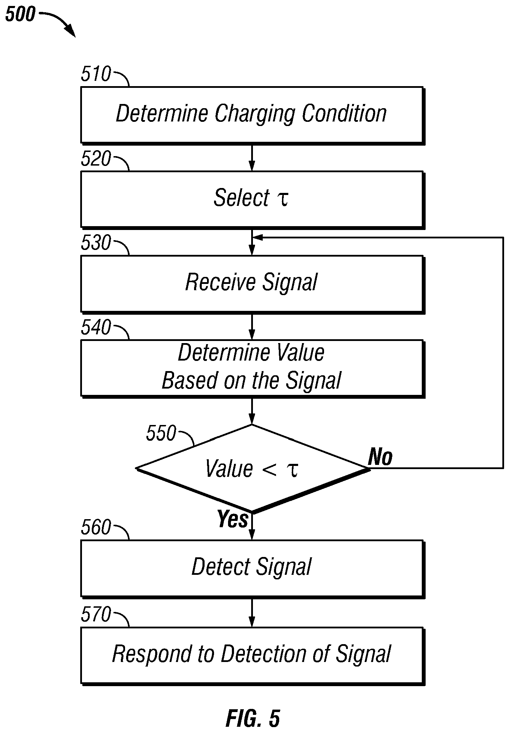

Figure 5 is a flowchart illustrating a method 500 of detecting a signal based at least in part on a charging condition of an electronic device. The process 500 begins, in block 510 by determining a charging condition of an electronic device. The electronic device may, for example, be the wireless communication device 100 of Figure 1 and the charging condition can be determined by the processor 110. In one embodiment, the charging condition is a Boolean condition, e.g. either true or false. For example, in one embodiment, the charging condition is indicative of whether the electronic device is receiving at least a predetermined threshold amount of power from an external power source. For example, if the wireless communication device 100 of Figure 1 is connected, via a battery charger, to a wall socket or a cigar lighter receptacle, the charging condition may indicate this connection. In one embodiment, the charging condition is stored in the memory 120 as a one-bit flag, which is designated '1' if the wireless communication device 100 is receiving a predetermined threshold amount of power from an external power source or '0' if it is not.

In another embodiment, the charging condition is a non-Boolean condition, which can take either more than two discrete values or a continuous value. For example, in one embodiment, the charging condition is indicative of a battery charge level of the battery 180 of the wireless communication device 100. The battery charge level, and thus, the charging condition, may be represented by one of a number of discrete values, such as 25%, 50%, 75%, and 100%. In another embodiment, the charging condition is indicative of battery charge level, but is Boolean, true when the battery charge level is greater than a predetermined threshold and false when the battery charge level is less than the threshold.

Next, in block 520, a threshold is selected based at least in part on the charging condition of the electronic device. In one embodiment, the processor 110 selects the threshold. The threshold may be selected by the processor using a look-up table stored in the memory. For example, a first threshold may be selected if the charging condition is true and a second threshold may be selected if the charging condition is false. In another embodiment, the processor selects a threshold using an equation including the charging condition as an input variable. For example, the threshold may be increased or decreased proportionally to the charge level of the battery 180.

Continuing, in block 530, a wireless communication signal is received. The signal may be received, for example, by the wireless communication device 100 or the processor 110 via one or more of the antenna 170, transceiver 160, and modem 150. The wireless communication signal may be simply noise or a transmitted signal embedded in noise, making it difficult to determine if a wireless signal was actually transmitted or whether only noise was received.

Next, in block 540, a value based on the wireless communication signal is determined. One or more of the transceiver 160, modem 150, and processor 110 can determine the value. In one embodiment, the value is an integration sum of the voltage induced on the antenna 170 by the wireless communication signal over a predetermined period of time. In another embodiment, the value is a maximum voltage induced on the antenna 170 by the signal. In yet another embodiment, the value is a received power of the wireless communication signal, or a phase of the signal.

Continuing, in decision block 550, the determined value is compared to the selected threshold. The comparison can be performed by, for example, the processor 110. If the value is less than the threshold, the method 500 continues to block 560 where the signal is detected. In one embodiment, the presence (or absence) of the signal is stored as a one-bit flag in the memory 120. If the value is greater than or equal to the threshold, the signal is not detected and the method 500 returns to block 530. In another embodiment, the outputs of decision block 550 are switched such that if the value is greater than the threshold, the method continues to block 560, whereas if the value is less than or equal to the magnitude of the threshold, the method returns to block 530.

Once the signal has been detected, in block 560, the process continues to block 570 in which various actions may be performed in response to the detection. In one embodiment, the detection is indicated to the user via the output device 140. In another embodiment, the wireless communication signal is received on a first wireless channel and the detection prompts the wireless communication device 100 to monitor a second wireless channel. For example, in one embodiment the wireless communication signal is an indicator received on a paging indicator channel (PICH), and in response, the wireless communication device 100 monitors a paging channel (PCH) for an incoming page or call.

While the specification describes particular examples of the present invention, those of ordinary skill can devise variations of the present invention without departing from the inventive concept. Those skilled in the art will understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof. The terms signal and threshold can depend upon the signal modulation technique. If Pulse Amplitude Modulation (PAM) is used then the voltage amplitude or power of the signal represents its value. In that case the threshold is simply a power value. If Phase Shift Keying is used, then the phase of the signal, which can translate to the sign of the received signal voltage can represent the signal value. In this case if the signal is integrated over multiple symbols, then the sign and amplitude of the received signal together indicate the signal value.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the examples disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods or algorithms described in connection with the examples disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. A storage medium may be coupled to the processor such that the processor can read information from, and write information to, the storage medium. In the alternative, the storage medium may be integral to the processor. The processor and the storage medium may reside in an ASIC.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

The previous description of the disclosed examples is provided to enable any person skilled in the art to make or use the present invention. Various modifications to these examples will be readily apparent to those skilled in the art, and the generic principles defined herein may be applied to other examples without departing from the scope of the invention. Thus, the present invention is not intended to be limited to the examples shown herein but is to be accorded the widest scope consistent with the principles and novel features disclosed herein.

## Claims

1. A method (500) of detecting a wireless communication signal, the method comprising:
determining (510) a charging condition of an electronic device;
selecting (520) a threshold based, at least in part, on the charging condition of the electronic device;
receiving (530) a wireless communication signal;
determining (540) a value based on the wireless communication signal; and
detecting (560) the wireless communication signal based on a comparison (550) of the value to the threshold,
wherein the charging condition is indicative of whether the electronic device is receiving at least a predetermined threshold amount of power from an external power supply or indicative of a battery charge level, and
wherein the value is one of:
an integration sum of a voltage induced on an antenna of the electronic device by the wireless communication signal over a predetermined period of time,
a maximum voltage induced on the antenna by the wireless communication signal,
a received power of the wireless communication signal, or
a phase of the wireless communication signal.

2. The method of Claim 1, further comprising decoding the wireless communication signal.

3. The method of Claim 1, wherein selecting a threshold comprises selecting a first threshold if the electronic device is receiving the power and a second threshold if the electronic device is not receiving the power, wherein the first threshold is different than the second threshold.

4. The method of Claim 1, wherein the threshold is selected from a plurality of predetermined candidate thresholds.

5. The method of a Claim 1, wherein receiving a wireless communication signal comprises monitoring a paging indicator channel, PICH.

6. The method of Claim 5, further comprising monitoring a paging channel, PCH, in response to the detecting.

7. An electronic device comprising:
means for determining a charging condition of an electronic device;
means for selecting a threshold based, at least in part, on the charging condition of the electronic device;
means for receiving a wireless communication signal;
means for determining a value based on the wireless communication signal; and
means for detecting the wireless communication signal based on a comparison of the value to the threshold.
wherein the charging condition is indicative of whether the electronic device is receiving at least a predetermined threshold amount of power from an external power supply or indicative of a battery charge level, and
wherein the value is one of:
an integration sum of a voltage induced on an antenna of the electronic device by the wireless communication signal over a predetermined period of time,
a maximum voltage induced on the antenna by the wireless communication signal,
a received power of the wireless communication signal, or
a phase of the wireless communication signal.

8. The electronic device of claim 7,
wherein the means for receiving is provided by a receiver, and
wherein the means for determining a charging condition, the means for selecting, the means for determining a value and the means for detecting are provided by a processor configured to perform these tasks.

9. The electronic device of Claim 8, further comprising a jack for connecting the electronic device to an external power supply, wherein the processor is configured to determine the charging condition of the electronic device based on whether the electronic device is receiving at least the predetermined threshold amount of power from the external power supply.

10. The electronic device of Claim 9, wherein the processor is configured to select a first threshold if the electronic device is receiving the power from the external power supply and a second threshold if the electronic device is not receiving the power from the external power supply, wherein the first threshold is different than the second threshold.

11. The electronic device of Claim 8, further comprising a power interface for wirelessly receiving power via electromagnetic waves from an external power supply, wherein the processor is configured to determine the charging condition of the electronic device based on whether the electronic device is receiving at least the threshold amount of power from the external power supply.

12. The electronic device of Claim 8, further comprising a battery, wherein the processor is configured to determine the charging condition of the electronic device based on the battery charge level.

13. A computer-readable medium storing instructions which, when executed by one or more processors, cause a computer to perform a method of one of the claims 1 - 6.

## Patentansprüche

1. Verfahren (500) zum Detektieren eines drahtlosen Kommunikationssignal, das Verfahren beinhaltend:
Ermitteln (510) eines Ladezustandes einer elektronischen Vorrichtung;
Auswählen (520) eines Schwellenwertes basierend, zumindest teilweise, auf dem Ladezustand der elektronischen Vorrichtung;
Empfangen (530) eines drahtlosen Kommunikationssignals;
Ermitteln (540) eines Wertes basierend auf dem drahtlosen Kommunikationssignal; und
Detektieren (560) des drahtlosen Kommunikationssignals basierend auf einem Vergleich (550) des Wertes mit dem Schwellenwert,
wobei der Ladezustand darauf hinweist, ob die elektronische Vorrichtung zumindest eine vorbestimmte Schwellenwertmenge an Leistung von einer externen Spannungsquelle empfängt, oder der Ladezustand auf einen Batterieladelevel hinweist, und
wobei der Wert eines ist aus:
eine Integrationssumme einer Spannung, welche auf einer Antenne der elektronischen Vorrichtung durch das drahtlose Kommunikationssignal über eine vorbestimmte Zeitperiode hinweg induziert wird,
eine Maximalspannung, welche durch das drahtlose Kommunikationssignal auf der Antenne induziert wird,
eine empfangene Leistung des drahtlosen Kommunikationssignals, oder
eine Phase des drahtlosen Kommunikationssignals.

2. Verfahren nach Anspruch 1, weiter beinhaltend ein Decodieren des drahtlosen Kommunikationssignals.

3. Verfahren nach Anspruch 1, wobei das Auswählen eines Schwellenwertes ein Auswählen eines ersten Schwellenwertes beinhaltet, wenn die elektronische Vorrichtung die Leistung empfängt, und eines zweiten Schwellenwertes, wenn die elektronische Vorrichtung die Leistung nicht empfängt, wobei der erste Schwellenwert verschieden von dem zweiten Schwellenwert ist.

4. Verfahren nach Anspruch 1, wobei der Schwellenwert ausgewählt wird aus einer Mehrzahl von vorbestimmten Schwellenwertkandidaten.

5. Verfahren nach Anspruch 1, wobei das Empfangen eines drahtlosen Kommunikationssignals ein Überwachen eines Paging-Indikator-Kanals, PICH, beinhaltet.

6. Verfahren nach Anspruch 5, weiter beinhaltend ein Überwachen eines Paging-Kanals, PCH, in Antwort auf das Detektieren.

7. Elektronische Vorrichtung, beinhaltend:
Mittel zum Ermitteln eines Ladezustandes einer elektronischen Vorrichtung;
Mittel zum Auswählen eines Schwellenwertes basierend, zumindest teilweise, auf dem Ladezustand der elektronischen Vorrichtung;
Mittel zum Empfangen eines drahtlosen Kommunikationssignals;
Mittel zum Ermitteln eines Wertes basierend auf dem drahtlosen Kommunikationssignal; und
Mittel zum Detektieren des drahtlosen Kommunikationssignals basierend auf einem Vergleich des Wertes mit dem Schwellenwert,
wobei der Ladezustand darauf hinweist, ob die elektronische Vorrichtung zumindest eine vorbestimmte Schwellenwertmenge an Leistung von einer externen Spannungsquelle empfängt, oder der Ladezustand auf einen Batterieladelevel hinweist, und
wobei der Wert eines ist aus:
eine Integrationssumme einer Spannung, welche auf einer Antenne der elektronischen Vorrichtung durch das drahtlose Kommunikationssignal über eine vorbestimmte Zeitperiode hinweg induziert wird,
eine Maximalspannung, welche durch das drahtlose Kommunikationssignal auf der Antenne induziert wird,
eine empfangene Leistung des drahtlosen Kommunikationssignals, oder
eine Phase des drahtlosen Kommunikationssignals.

8. Elektronische Vorrichtung nach Anspruch 7,
wobei die Mittel zum Empfangen durch einen Empfänger bereitgestellt werden, und
wobei die Mittel zum Ermitteln eines Ladezustandes, die Mittel zum Auswählen, die Mittel zum Ermitteln eines Wertes und die Mittel zum Detektieren durch einen Prozessor bereitgestellt werden, der zur Durchführung dieser Aufgaben ausgebildet ist.

9. Elektronische Vorrichtung nach Anspruch 8, weiter beinhaltend eine Buchse zum Verbinden der elektronischen Vorrichtung mit einer externen Spannungsquelle, wobei der Prozessor ausgebildet ist, den Ladezustand der elektronischen Vorrichtung zu ermitteln, basierend darauf, ob die elektronische Vorrichtung zumindest die vorbestimmte Schwellenwertmenge an Leistung von der externen Spannungsquelle empfängt.

10. Elektronische Vorrichtung nach Anspruch 9, wobei der Prozessor ausgebildet ist, einen ersten Schwellenwert auszuwählen, wenn die elektronische Vorrichtung die Leistung von der externen Spannungsquelle empfängt, und einen zweiten Schwellenwert, wenn die elektronische Vorrichtung die Leistung von der externen Spannungsquelle nicht empfängt, wobei der erste Schwellenwert verschieden von dem zweiten Schwellenwert ist.

11. Elektronische Vorrichtung nach Anspruch 8, weiter beinhaltend eine Leistungsschnittstelle, um Leistung drahtlos über elektromagnetische Wellen von einer externen Spannungsquelle zu empfangen, wobei der Prozessor ausgebildet ist, den Ladezustand der elektronischen Vorrichtung zu ermitteln, basierend darauf, ob die elektronische Vorrichtung zumindest die vorbestimmte Schwellenwertmenge an Leistung von der externen Spannungsquelle empfängt.

12. Elektronische Vorrichtung nach Anspruch 8, weiter beinhaltend eine Batterie, wobei der Prozessor ausgebildet ist, den Ladezustand der elektronischen Vorrichtung zu ermitteln, basierend auf dem Batterieladelevel.

13. Computerlesbares Medium, auf dem Instruktionen gespeichert sind, die bei Ausführung durch einen oder mehrere Prozessoren einen Computer veranlassen, ein Verfahren nach einem der Ansprüche 1-6 durchzuführen.

## Revendications

1. Procédé (500) de détection d'un signal de communication sans fil, le procédé comprenant :
la détermination (510) d'une condition de charge d'un dispositif électronique ;
la sélection (520) d'un seuil sur la base, au moins en partie, de la condition de charge du dispositif électronique ;
la réception (530) d'un signal de communication sans fil ;
la détermination (540) d'une valeur sur la base du signal de communication sans fil ; et
la détection (560) du signal de communication sans fil sur la base d'une comparaison (550) de la valeur avec le seuil,
dans lequel la condition de charge indique si le dispositif électronique reçoit ou non au moins une quantité de seuil d'énergie prédéterminée à partir d'une alimentation en énergie externe, ou indique un niveau de charge de batterie, et
dans lequel la valeur est une parmi :
une somme d'intégration d'une tension induite sur une antenne du dispositif électronique par le signal de communication sans fil sur une période de temps prédéterminée,
une tension maximale induite sur l'antenne par le signal de communication sans fil,
une énergie reçue du signal de communication sans fil, ou
une phase du signal de communication sans fil.

2. Procédé selon la revendication 1, comprenant en outre le décodage du signal de communication sans fil.

3. Procédé selon la revendication 1, dans lequel la sélection d'un seuil comprend la sélection d'un premier seuil si le dispositif électronique reçoit l'énergie et un deuxième seuil si le dispositif électronique ne reçoit pas l'énergie, dans lequel le premier seuil est différent du deuxième seuil.

4. Procédé selon la revendication 1, dans lequel le seuil est sélectionné à partir d'une pluralité de seuils candidats prédéterminés.

5. Procédé selon la revendication 1, dans lequel la réception d'un signal de communication sans fil comprend la surveillance d'un canal d'indicateur de paging, PICH.

6. Procédé selon la revendication 5, comprenant en outre la surveillance d'un canal de paging, PCH, en réponse à la détection.

7. Dispositif électronique comprenant :
des moyens pour déterminer une condition de charge d'un dispositif électronique ;
des moyens pour sélectionner un seuil sur la base, au moins en partie, de la condition de charge du dispositif électronique ;
des moyens pour recevoir un signal de communication sans fil ;
des moyens pour déterminer une valeur sur la base du signal de communication sans fil ; et
des moyens pour détecter le signal de communication sans fil sur la base d'une comparaison de la valeur avec le seuil,
dans lequel la condition de charge indique si le dispositif électronique reçoit ou non au moins une quantité de seuil d'énergie prédéterminée à partir d'une alimentation en énergie externe, ou indique un niveau de charge de batterie, et
dans lequel la valeur est une parmi :
une somme d'intégration d'une tension induite sur une antenne du dispositif électronique par le signal de communication sans fil sur une période de temps prédéterminée,
une tension maximale induite sur l'antenne par le signal de communication sans fil,
une énergie reçue du signal de communication sans fil, ou
une phase du signal de communication sans fil.

8. Dispositif électronique selon la revendication 7,
dans lequel les moyens pour recevoir sont assurés par un récepteur, et
dans lequel les moyens pour déterminer une condition de charge, les moyens pour sélectionner, les moyens pour déterminer une valeur et les moyens pour détecter sont assurés par un processeur configuré pour exécuter ces tâches.

9. Dispositif électronique selon la revendication 8, comprenant en outre une prise pour connecter le dispositif électronique à une alimentation en énergie externe, dans lequel le processeur est configuré pour déterminer la condition de charge du dispositif électronique sur la base du fait que le dispositif électronique reçoit au moins la quantité de seuil d'énergie prédéterminée à partir de l'alimentation en énergie externe.

10. Dispositif électronique selon la revendication 9, dans lequel le processeur est configuré pour sélectionner un premier seuil si le dispositif électronique reçoit l'énergie à partir de l'alimentation en énergie externe et un deuxième seuil si le dispositif électronique ne reçoit pas l'énergie à partir de l'alimentation en énergie externe, dans lequel le premier seuil est différent du deuxième seuil.

11. Dispositif électronique selon la revendication 8, comprenant en outre une interface d'alimentation pour recevoir sans fil de l'énergie par le biais d'ondes électromagnétiques à partir d'une alimentation en énergie externe, dans lequel le processeur est configuré pour déterminer la condition de charge du dispositif électronique sur la base du fait que le dispositif électronique reçoit au moins la quantité de seuil d'énergie prédéterminée à partir de l'alimentation en énergie externe.

12. Dispositif électronique selon la revendication 8, comprenant en outre une batterie, dans lequel le processeur est configuré pour déterminer la condition de charge du dispositif électronique sur la base du niveau de charge de batterie.

13. Support lisible par ordinateur stockant des instructions qui, quand elles sont exécutées par un ou plusieurs processeurs, amènent un ordinateur à mettre en oeuvre un procédé selon l'une des revendications 1 à 6.
